# EUROPEAN PATENT APPLICATION

(11) **EP 4 653 493 A1**
(43) Date of publication of application: **26.11.2025**
(21) Application number: 24177674.9
(22) Date of filing: 23.05.2024
(51) Int. Cl.: C08J 11/12

(54) **VISBREAKING OF RLDPE WITH ULTRA LOW MFR**

(71) Applicant: Basell Polyolefine GmbH, 50389 Wesseling (DE)
(72) Inventor: MANNEBACH, Gerd, 65926 Frankfurt am Main (DE); ELSAS, Katharina, 65926 Frankfurt am Main (DE); PFEIFFER, Maximilian, 65926 Frankfurt am Main (DE)
(74) Representative: LyondellBasell

(57) **Abstract**

The present disclosure relates to a visbreaking process, in which either vacuum is applied or not, using low density polyethylene recyclates (rLDPE) comprising also amounts of linear low density polyethylene (rLLDPE). Application of a low energy-intake and vacuum during visbreaking treatment, by limiting temperature and RPM of the extruder's screw, a superior visbroken material is obtained, suitable for films with less gels. The disclosure provides a method and visbroken, degassed LDPE recyclate having less odor. The visbroken LDPE recyclate shows only minor increase in or almost the same MFR compared to the starting material, and only moderate increase of density, by a removing of at least 90 % of the defects and gels and showing superior optical performance when processed to films. The invention is described in more details in the figures, showing the significant reduction of the amounts of defects and the very low increase in MFR.

## Description

Disclosed is a process to obtain a visbroken r-LDPE with no or at least only minor increase of the initial MFR. It has surprisingly been found, that quality of films with less gels, derived only from recycled low density polyethylene, containing also some amounts of linear low density polyethylene, can be significantly improved, by applying thermal and mechanical treatment steps, over a certain period of time at certain temperatures, at least higher than 220°C and lower than 340°C, after melting and mechanical processing of the recyclate with less energy-intake than known from the state of the art, to remove inhomogeneities, gels and impurities in the LDPE recyclate, to obtain visbroken LDPE recyclate suitable for films, by using recyclates with ultra low MFR in the range of 0.1 to 2.0 g/10 min (according to ISO 1133, 190°C, 2.16 kg).

### Background of Invention

Revive of post consumer waste offers some challenges for finding suitable applications for recyclates, which are often suffering from poor processing and poor articles quality. Especially when recyclates are used in films one of the key properties in blown film applications is the issue of gels is crucial. All conventional PCR feedstocks especially in LDPE feedstock, which is always a mixture of LDPE and LLDPE, mostly in a ratio of 98/2 more or less, which shows a significant high amount of gels in every shape, besides impurities.

Already known from the state of the art are thermal visbreaking processes, performed in an extruder. A thermal and mechanical treatment conditions in an extruder are applied to convert recycled polyolefins into visbroken material, having a reduced weight average molecular weight. These processes involve subjecting polyolefins to high temperatures, e.g., 370°C and pressures, also in the presence of specific catalysts or additives, to accelerate decomposition of the material. The aim is to break down the long-chain polyolefin molecules into shorter-chain molecules, resulting in a reduction in the polymer's molecular weight, and to elevate the viscosity to higher MFRs (WO 2022/271726).

By reducing the molecular weight, visbreaking of LDPE, e.g., can alter its physical properties, such as increasing its melt flow rate (MFR) significantly or improving its processability. This modified LDPE can then be used in various applications where enhanced flow characteristics are desired, such as in extrusion processes for film or pipe manufacturing.

Besides the fact, that the visbreaking technique consumes high amount of energy, when high temperatures are applied, as the well known visbreaking conditions require at least 300°C when heating and mechanically processing the recyclates. This thermal treatment at elevated temperatures reduces the thermal and mechanical stability of the products, making it more prone to degradation at high temperatures, affecting the final product properties, while the process still consumes a lot of energy as it requires energy-intensive heating and pressurizing of the polymer melt.

Especially for LDPE used in film applications, a high mechanical stability, high quality properties and optical performance suffer when recycled material is applied. As PCR-films typically suffer from poor optical quality, due to impurities, gels and defects, especially as the gel content is a crucial point for determination of film quality, improvements of optical properties in films obtainable by recycled polyolefins are more than desirable.

The methods described in the state of the art, the viscosity is increased to enhance processability of visbroken polymers. Unfortunately, these methods have the significant drawback that these methods always change the properties of the visbroken material. During the visbreaking process of polyethylene, the notable disadvantage is the alteration in density and molecular weight distribution, consequently affecting the melt flow rate (MFR). This variability leads to inconsistencies in product properties when reusing visbroken material, compromising product quality and performance. Additionally, the altered molecular structure may introduce unexpected challenges in downstream processing and end-product applications, necessitating careful consideration of material characteristics during recycling and reintegration processes.

Therefore, there is a strong need to provide a visbroken recyclate, having the same properties, as the non-visbroken starting polymer. Having the same MFR and density in the visbroken material provides material having the same features and properties as the initial PCR material, by not increasing the MFR and density too.

Another object is to provide methods for degassing and deodorizing the recyclates. Since post consumer recyclates are heavily contaminated, their odor is also very strong due to rotting and organic decomposition processes, which greatly limits working with recyclates and especially their further use. The smell can also affect high quality packaging and films, since the strong odor can also transfer to products, it further emphasizes the importance of addressing the issue of odor in post consumer recyclates, as it can affect the quality and acceptability of handling the material processing and also the final products.

So, one aspect of the present invention is to obtain visbroken recyclate having a lowest possible increase in MFR and density to produce e.g., films with less gels in high optical quality using the visbroken material also with reduced odor. Having a low amount of defects and less gels is key. While improving the optical performance, processability, handling odor and quality of e.g., low density polyethylene recyclates besides offering high processability, combined with high optical performance in the products. Furthermore, an efficient visbreaking process is in the focus, which helps to save energy, while leading to improved high quality film products without or at least with less gels and defects in the structure and can be performed at lower temperatures.

### Summary of the Invention

The present invention discloses a visbreaking method, providing a visbroken low density polyethylene (LDPE or rLDPE) recyclate, having less gels and odor and only a minor decrease in MFR, and density compared to the initial recyclate LDPE material derived from PCR, with less defects, gels, meaning having superior optical performance when processed to films. The visbreaking method for processing low density polyethylene (LDPE) recyclate comprising also LLDPE, comprising the steps of:
a) providing a LDPE recyclate, comprising LLDPE; having
   i. a first density in the range of from 0.910 g/cm3 to 0.940 g/cm3 (according to ISO 1183),
   ii. a first MFR in the range of 0.1 to 2.0 g/10 min (according to ISO 1133, 190°C, 2.16 kg),
   iii. a first Mw of 110.000 to 120.000 g/mol measured via GPC (according to ISO 13885-1),
b) extruding the recyclate to obtain a visbroken LDPE recyclate melt,
c) optionally subjecting to vacuum conditions,
d) subjecting the LDPE recyclate melt to visbreaking conditions performed at least at two different temperatures,
e) obtaining a visbroken LDPE recyclate; having
   i. a second density in the range of from 0.910 g/cm3 to 0.940 g/cm3 (according to ISO 1183),
   ii. a second MFR in the range of 0.1 to 2.0 g/10 min (according to ISO 1133, 190°C, 2.16 kg),
   iii. a second Mw of 70.000 to 100.000 g/mol measured via GPC (according to ISO 13885-1).

It has surprisingly been found that visbroken LDPE recyclate obtained by the method provided herein, offers high optical performance and quality when processed to films. Reduction in odor via adding vacuum conditions, meaning less smell resulting from first life residues, contaminants originating from consumer packaging and remains of decomposition of remains of first life uses. Having further only a minor increase in MFR and density compared to the MFR of the starting LDPE recyclate, resulting in high quality visbroken LDPE recyclate.

So, this method provides visbroken low density polyethylene recyclates which quality can be significantly improved compared to the methods known from the state of the art, by keeping the MFR and density as low as possible, by applying thermal visbreaking conditions with a low amount of energy intake in the extruder.

The present disclosure relates to a method for processing polyolefin recyclates, in particular low density polyethylene recyclates derived from post consumer waste material, more precisely of waste comprising LDPE film material comprising further LLDPE, by applying mechanical and thermal treatment in a visbreaking process step optionally equipped with vacuum conditions, performed in an extruder at lower temperatures than known from the state of the art.

### Drawings

Figure 1 shows visbroken LDPE recyclate, showing the change in MFR, for the three samples. Used as reference the LDPE recyclate, compared with Sample 1 (without vacuum) and Sample 2 (with vacuum) visbroken LDPE.
Figure 2 shows visbreaking of LDPE recyclate, showing a decrease in number of defects, Reference LDPE recyclate material compared with Sample 1 (without vacuum) and Sample 2 (with vacuum).

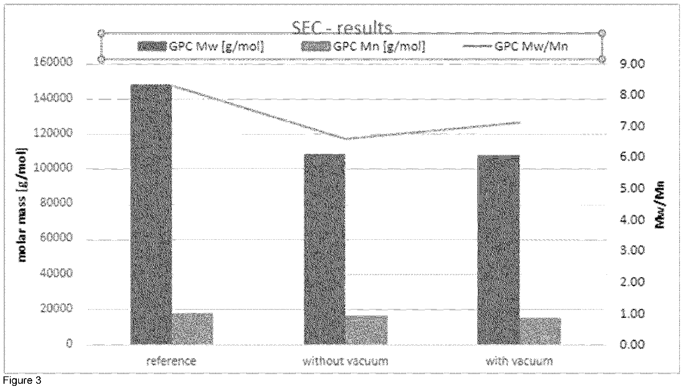

Figure 3 shows visbreaking of LDPE recyclate, showing decrease in molecular weight distribution etc., for Reference, Sample 1 (without vacuum) and Sample 2 (with vacuum).

### Detailed Description of the Invention

The present disclosure relates to a method for processing polyolefin recyclates, particularly low density polyethylene (LDPE) recyclates comprising linear low density polyethylene (LLDPE), derived from film waste material. The process involves applying visbreaking conditions in the extruder to convert the LDPE recyclate into a visbroken LDPE recyclate having a reduced weight average molecular weight, but limit the increase of the MFR and density, to obtain visbroken LDPE recyclate material which is suitable for film application showing extraordinarily good optical performance without or at least 95 % less gels than the comparative films known from the state of the art, preferably a film having at least 97 % less gels (see reference, Sample 1 and 2), either obtained with vacuum conditions or without.

Surprisingly, with the aim to reduce the amounts of defects and the gel-content in recycled LDPE-feedstocks a new and inventive method for thermal visbreaking was found, providing with less energy intake and energy consumption of the whole process by reducing the temperature applied with generally lower temperatures, better results and improved optical performance in films, having less gels. With this method it is possible to reduce the defect count and the gels compared to a reference material (LDPE recyclate material) by at least 95% whilst keeping the MFR and the density of the material relatively low. Besides not increasing the MFR of the visbroken material too much, the LCB content is kept at a low level.

In detail, a visbreaking method for processing low density polyethylene (LDPE) recyclate comprising the steps of:
a) providing a LDPE recyclate, comprising LLDPE; having
   i. a first density in the range of from 0.910 g/cm3 to 0.940 g/cm3 (according to ISO 1183),
   ii. a first MFR in the range of 0.1 to 2.0 g/10 min (according to ISO 1133, 190°C, 2.16 kg),
   iii. a first Mw of 110.000 to 120.000 g/mol measured via GPC (according to ISO 13885-1),
b) extruding the recyclate to obtain a visbroken LDPE recyclate melt,
c) optionally subjecting to vacuum conditions,
d) subjecting the LDPE recyclate melt to visbreaking conditions performed at least at two different temperatures,
e) obtaining a visbroken LDPE recyclate; having
   iv. a second density in the range of from 0.910 g/cm3 to 0.940 g/cm3 (according to ISO 1183),
   v. a second MFR in the range of 0.1 to 2.0 g/10 min (according to ISO 1133, 190°C, 2.16 kg).
   vi. a second Mw of 70.000 to 100.000 g/mol measured via GPC (according to ISO 13885-1).

The process disclosed herein provides visbroken low density polyethylene starting from LDPE recyclate comprising LLDPE; derived from low density polyethylene film material with linear low density polyethylene, having an initial density in the range of 0.910 g/cm3 to 0.940 g/cm3 (according to ISO 1183), or in the range of 0.915 g/cm3 to 0.935 g/cm3. An initial MFR in the range 0.1 to 2.0 g/10 min, preferably of 0.5 to 1.3 g/10 min, preferably 0.6 to 1.0 g/10 min (according to ISO 1133, 190°C, 2.16 kg), preferably 0.7 g/10 min, an MFR5 of 2.0 to 5.0 g/10 min, preferably of 2.5 to 4.0 g/10 min, preferably 2.6 g/10 min (according to ISO 1133, 190°C, 5 kg), having an initial molar mass distribution Mw of 110.000 to 120.000 g/mol measured via GPC, preferably Mw of 140.000 to 150.000 (according to ISO 13885-1).

Further it has been found that the invention disclosed herein provides a method to provide visbroken material, having a ratio of the second density to the first density in the range of 1.0 to 1.5, wherein the ratio of the second MFR to the first MFR is in the range of 1.0 to 1.5, wherein the ratio of second molecular weight distribution to the first molecular weight distribution is in the range of from 0.60 to 0.85. The main object of the present method is, to provide a method which changes the properties of the recyclate, e.g., derived from PCR film material not much, and leads only to a minor change in MFR and density, to provide visbroken recyclates having high processability, high optical performance and high quality in films when further processed.

Furthermore, the low density polyethylene is a100 % recyclate, derived from a post consumer and/or post industrial waste or a blend thereof, comprising low density polyethylene (LDPE) and amounts of linear low density polyethylene (LLDPE), derived from film and/or packaging material. The LDPE recyclate feedstock further comprises ethylene homopolymers, copolymers of units derived from ethylene and units derived from one or more C3 - C12 alpha-olefins, units derived from ethylene and units derived from copolymers of one or more units of alpha mono olefins including polar groups, or mixtures thereof. The initial LDPE recyclate or feedstock (rLDPE) may be derived from post-consumer recycled polyolefins consisting primarily of film waste material comprising, LDPE recyclates and amounts of LLDPE in the range of 0.1 to 1.5 wt%.

Furthermore, the used feedstock is a LDPE recyclate comprising LLDPE derived from any feedstock available, preferably comprising post-consumer recyclate waste, and/or post-industrial recyclate waste, or a combination thereof, preferably derived from recyclate film material. The main aspect of the invention is to provide visbroken LDPE material, which can be applied for the same articles and purposes, namely film application, as the recyclates source of origin (rLDPE comprising rLLDPE).

In the sense of the present invention, the LDPE recyclate feedstock comprises post-consumer recycled waste, post-industrial recycled waste, or a combination thereof, preferably recycled film material. Preferably comprising at least 98 % non-colored film material, and about 2 % of colored and printed films, derived from all sorts of packaging materials.

According to the invention, the low density polyethylene is 100 % recyclate, derived from a post consumer and/or post industrial or a blend thereof, comprising low density polyethylene (LDPE). The low density polyethylene is derived from a LDPE source, preferably derived from film waste material. Preferably the recyclate comprises less impurities such as polyolefins with higher density, or PP, PVC or the like or other impurities which are comprised in the polyethylene-rich polyolefin, recovered from post-consumer waste, or recovered from a post-industrial waste.

According to the invention, the method comprises the steps of
a) subjecting the LDPE recyclate to at least one thermal and mechanical treatment step at a temperature higher than 220°C in an extruder, and
b) at least one thermal and mechanical treatment step at a temperature lower than 340°C in an extruder,
c) optionally applying vacuum conditions during the thermal and mechanical treatment in the extruder, either in step a) and/or b),
wherein the order of the steps a) and b) are arbitrary and can be renumbered, rearranged, repeated in every feasible way.

The visbreaking method described herein consumes less energy for the whole process, than other processes known from the state of the art. The range of the temperature applied is higher than 220°C and does not exceed 340°C.

Furthermore, the disclosed visbreaking method comprises at least one thermal and mechanical treatment step of the recycled LDPE in an extruder, at a temperature higher than 220°C.

The visbreaking method further comprises at least one thermal treatment step at a temperature lower than 340°C using any possible extruder.

The treatment is performed using for example a single screw extruder, a corotating twin screw extruder, a counter rotating twin screw extruder, or combinations thereof.

The process can also be performed using a co-rotating twin screw extruder with a screw temperature profile higher than 220°C for the LDPE recyclate and lower than 340°C.

Besides that, the treatment may be formed by melt blending the LDPE recyclate as powders, flakes, pellets or combinations thereof together directly in a mixer, single or twin-screw extruder or other equipment known to a person skilled in the art; or alternatively, the compositions may be formed by (dry-) blending powders, flakes, pellets or combinations thereof of the recyclate polyolefin (A), at the main hopper or side feeder of a profile or film extruder, or injection molding machine or any other type of polymer processing equipment known to a person skilled in the art and subsequently melt blending in the aforementioned processing equipment. The processing equipment may be the final stage of blending as part of an article fabrication step, such as in the extruder used to melt and convey the composition prior to forming a sheet, pellets, or extruding them further to obtain a film.

In the sense of the present disclosure, the at least one thermal and mechanical treatment step a) and b) of the process are arbitrary and may be described here are not to be understood as final and may further include repetitions of each step or a different sequence of the steps, and can be renumbered, rearranged, repeated in every possible way, to obtain.

The main focus of the disclosed method is to induce less energy to the recyclate material compared to the state of the art, to ensure causing less damage to the polymer. Application of lower amount of energy during said melt blending process, imparts a specific energy of about 0.01 to about 5 kWh/kg to the LDPE recyclate, this requires thermal and mechanical treatment of the LDPE.

It is generally desirable during melt of the composition to impart a specific energy of about 0.1 to about 0.5 kilowatt-hours/kilogram (kW h/kg) to the composition. In another embodiment, melt blending is performed in a twin-screw extruder, such as co-rotating twin screw extruder, where the screw temperature is set from about 220°C to about 340°C for the LDPE recyclate, optionally providing also vacuum conditions. A higher energy introduction leads to and initiates crosslinking of the visbroken recyclate, resulting in a higher density, more defects, and higher MFR2. It appears that for the optical performance of a LDPE film derived from recyclates, its important not only to have the absence of gels, impurities and defects, but also that the haze optimal. According to the Table, which shows that low amount of energy intake optionally equipped with vacuum conditions is enough to visbreak the LDPE recyclate and reduce the amount of gel defects.

Optionally during the visbreaking process vacuum conditions are applied. Optionally applying vacuum during the thermal and mechanical treatment in the extruder, in any of the steps of the visbreaking process.

This low-pressure environment affects various aspects of the extrusion process, such as material flow, temperature control, and the removal of volatile compounds and gases, such as odor, derived from decomposition processes in the post consumer recyclates. This is aligned with "Le Chatelier's principle" reducing the pressure in the extruder chamber shifts the equilibrium of chemical reactions or physical processes involved in extrusion, leading to changes in the properties of the extruded material. Surprisingly it has been found, that subjecting the LDPE recyclate to visbreaking conditions under vacuum conditions, the extreme conditions affect the method and visbreaking process positively. Normally visbreaking methods are conducted under high thermal and heavy mechanical conditions. So, if vacuum conditions are applied, it influences the physical and chemical reaction in a positive way, meaning that less energy-intake and lower heat is necessary to obtain visbroken LDPE recyclate material, while having only minor changes in MFR, density and Mw, but still show exceptional high quality when processed to films. The degradation of the polymer chains is conducted under "extreme conditions", meaning if vacuum conditions are applied, besides thermal and mechanical treatment. Thus, according to Le Chatelier's principle the equilibrium is shifted towards the side of the degraded product, so the LDPE recyclate is visbroken while simultaneously degassing is performed under vacuum conditions to remove typical odors from first life uses. Additionally applying vacuum conditions to the recyclate, the temperature needed for visbreaking the recyclate can be reduced, thus avoiding initiating crosslinking of the visbroken LDPE recyclate material and reducing the energy consumed by the method. In the sense of the invention either vacuum conditions can be applied during the whole visbreaking process, or for short sequences at any stage of the process as single event or repeatedly.

Furthermore, the method wherein the visbroken LDPE recyclate is further processed to a film with less defects, comprising the visbroken LDPE recyclate having a MFR of 0.1 to 2.0 g/10 min (ISO 1133, 190°C, 2.16 kg), preferably between 0.8 and 1.5 g/10 min, preferably 0.9 and 1.2 g/10 min.

Optionally visbroken LDPE material is subjected to vacuum during visbreaking, for odor reduction and degassing. Normally, the LDPE recyclates derived from post consumer waste or post industrial waste, contain residues of first or previous life uses. Most parts of these remains are washed off or removed from the recyclate feedstock. For further processing it is suitable, that the visbroken material do not contain any gases, odors etc. which may cause issues in handling and processing in subsequent film extrusion.

The visbroken LDPE recyclate obtainable by the method described herein, wherein said visbroken LDPE recyclate has a MFR of 0.1 to 2.0 g/10 min (ISO 1133, 190°C, 2.16 kg), preferably between 0.8 and 1.5 g/10 min, preferably 0.9 and 1.2 g/10 min, which are the favorable ranges for LDPE material used in film processing. To provide high quality films comprising and containing the visbroken LDPE recyclate obtained by the method disclosed herein. The film shows less amounts of defects (at least 95 % less gels), derived from impurities and gels which are always present in recyclate material, as it is hardly achievable to guarantee a single polyolefin and pure material as source of feedstock. Additionally, additives may be applied to increase UV stability etc.

So, the film comprising the visbroken LDPE recyclate and obtainable by a method comprising the steps of:
a) visbreaking a LDPE recyclate to a visbroken LDPE recyclate having
   i. a second density of from 0.920 g/cm3 to 0.930 g/cm3 (according to ISO 1183),
   ii. a second MFR (according to ISO 1133, 190°C, 2.16 kg) in the range of 0.1 to 2.0, and
   iii. a second Mw of 70.000 to 100.000 g/mol measured via GPC (according to ISO 13885-1),
   iv. a melting point of about 150°C, and
b) casting the visbroken LDPE recyclate into a film.

Film, according to any of the preceding claims, comprising the visbroken LDPE recyclate, obtainable by a process according to the method as described herein. The visbreaking method and process requires feeding a LDPE recyclate to an extruder to obtain a visbroken LDPE recyclate melt, by thermally and mechanically processing the initial recyclate. One objective of the present invention is, to keep the MFR and density at a relatively low level. To ensure, that the film produced from obtained visbroken material is free of gels, and defects are reduced, the thermal conditions were set to generally lower temperatures with less energy intake in the extruder. That is also the reason, why the process can be seen as a sustainable, energy saving process as better results with less energy can be achieved.

It has been found that high energy-intakes at high and elevated temperatures applied to recyclates in the extruder according to visbreaking processes known from the state of the art, cause a lot of structural damages to the processed polymer, especially when LDPE is processed. As LDPE is characterized by its unique chain structure, which consists of long branched polymer chains. Unlike other types of polyethylene, such as high-density polyethylene (HDPE), low density polyethylene chains have numerous short branches stemming from the main backbone chain. This specific structure due to its branching creates less compact and more irregular arrangements of polymer chains, resulting in a lower density and greater flexibility compared to other polyethylene of higher density. So, if visbreaking conditions are applied to LDPE, the long and branched polymer chains are broken down under the applied heat and pressure. This results in the fragmentation of the polymer chains and a reduction in molecular size. As a consequence, there is a broader distribution of molecular weights and a modification of the physical properties of LDPE, including an increase in viscosity and density. If too much energy is applied then not only the chains and the crosslinked structures will break, but due to the branching of the initial structure gel defects start. Gel defects in LDPE typically consists of small and irregularly shaped particles or agglomerates within the polymer matrix. These defects can also be branches which started to be crosslinked, due to high energy intake.

Besides that, the formation of gels and defects in the structure, especially in recyclates, is typically attributed to the presence of impurities, which are always present in recyclates, degradation products from thermal treatments especially during extrusion processing. These impurities can promote under these conditions crosslinking or branching within the polymer chains in the visbroken LDPE, leading to the formation of gel particles dispersed throughout the material.

Despite that, gels can also result from thermal degradation, oxidation or mechanical stress during processing, which cause molecular chain scission and subsequent recombination into gel containing structures.

Normally, visbreaking processes lead to polymers with high MFR, and reduced Mw of course due to broken polymer chains, but at the same time start crosslinking the chains, which will increase the density, resulting in poor optical performance when it comes to film applications.

To prevent new gels, a reduced and lower energy-intake during extrusion process is applied, causing less damage to the processed polymer.

In more detail, at least two different temperatures are applied to the recyclate melt, at least one treatment is performed at temperature greater than 220°C and at least one treatment at temperatures lower than 340°C, during thermal and mechanical treatment processing of the recyclate melt in the extrusion line. Wherein the order of the single treatment steps is arbitrary and can be renumbered, rearranged, repeated etc. in every possible way. In the extruder specific conditions are applied, at different extruder zones and temperature zones at least one temperature and at least one exposure time for the recyclate in the extruder is used. There is also at least one screw temperature zone, which is set from greater than 150°C to lower than 340°C for the 100 % recyclate LDPE, having an MFR of about 1.5 g/10 min (ISO 1133, 190°C, 2.16 kg).

The extruder typically has a plurality of heating zones. It is to be noted that during the extrusion process, a substantial amount of heat is often generated from shear heating. Thus, the temperature of the polymeric melt in the extruder may be substantially higher than the temperature set in the heating zone(s) at the barrel of the screw and may also be substantially higher than the actual zone temperature readings in the extruder. Further, the actual zone temperature readings in various stages of the extruder may also be higher than the temperatures set at the heating zones. The temperatures referred to herein are the temperatures set in the heating zones. In addition to that, it may be suitable to introduce as less energy as possible to the recyclate in the extruder. Every extruder setup may be used to obtain the disclosed visbreaking process.

A typical setup is having a visbreaking zone and optional devolatilization zone. LDPE recyclate may be added to the visbreaking extruder at the inlet end of the extruder. The LDPE recyclate material is drawn through the extruder by at least one rotating screw drives in the barrel of the visbreaking extruder. The length of the visbreaking extruder can be divided into at least one zone. Each zone may have at least one of the following: a designated pitch on the screw drive, an inlet, for injecting gas, a vent or vacuum connection for expelling gas, for adding or expelling heat means, including, but not limited to pressure, temperature, and/or shear. According to the present disclosure, a visbroken LDPE recyclate is obtained by the process described herein, having a final density in the range from 0.920 g/cm3 to 0.930 g/cm3 (according to ISO 1183), preferably in the range from 0.925 to 0.928 g/cm3 (according to ISO 1183).

The final MFR of the visbroken LDPE is in the range of 1.5-to 6.0 g/10 min (according to ISO 1133, 190°C, 2.16 kg), preferably in the range of 2.0 to 3 g/10 min.

The final Mw is in the range of 70.000 to 100.000 g/mol measured via GPC (according to ISO 13885-1).

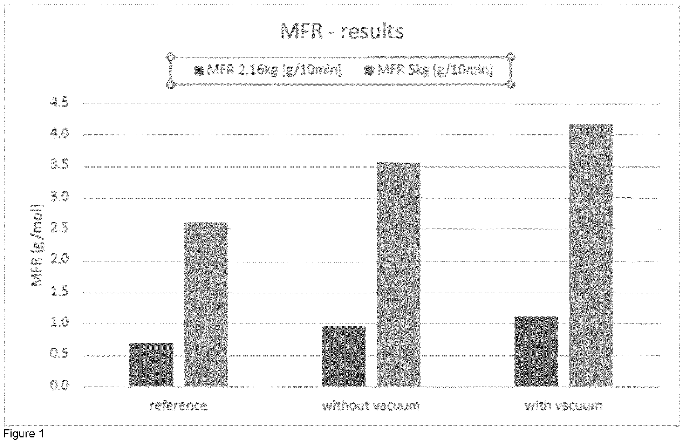

Furthermore, linked to the Mw is the long chain branching (LCB) of a polymer. In Figure 1 the molar mass distribution as well as the long chain branches per 1000C are plotted. Here the shift of the whole molecular weight distribution towards lower masses can be seen depending on energy intake of mechanical and thermal treatment in the extrusion process. Therefore, the ideal and preferred conditions (please see Table 1, Samples 1 and 2) for the visbreaking process involve lower temperatures than those known in the state of the art. In order to minimize the energy-intake into the polymer and thus obtain the optimal visbroken LDPE suitable for the production of defect-free films. So, to obtain ideal visbroken LDPE, resulting in ideal films with less defects and less gels, a lower long chain branching (LCB) content is advantageous.

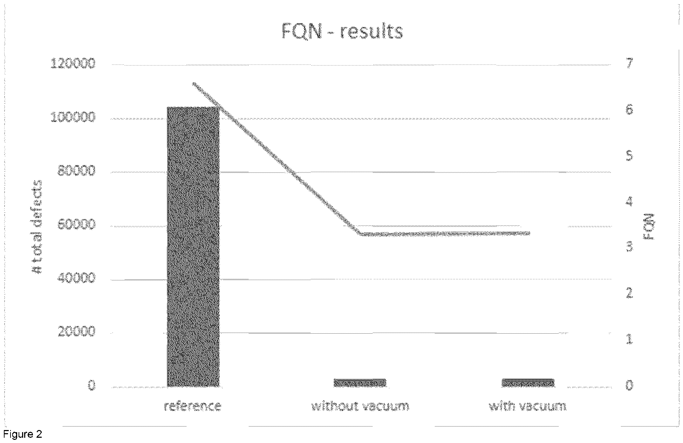

In Fig. 2 the difference in film quality regarding defects and amount of gels can be seen. Depending on the energy-intake via mechanical and thermal treatment in the extruder during visbreaking processing, the obtained visbroken LDPE material shown when further processed to films exhibit increasing numbers of defects and gels, thus differing in film quality (see Fig 2). The different visuals of the produced films clearly demonstrate the influence of energy-intake and LCB. So, with an increase in energy-intake during visbreaking of the LDPE-recyclate the haziness of the films comprising the visbroken LDPE-recyclate is also reduced.

Referring to Table 1, the total number of defects given, show that there are limitations up to which point the visbreaking is beneficial to the film-quality. Increasing the energy-intake too much will initiate crosslinking which can be seen via amount of defects and an increase in the gel-content.

The visbroken material which is provided by the method disclosed herein is preferably used for producing films, made from visbroken LDPE recyclate. It is desired that these films are comprising only recyclate material, and still can be applied in the production of film with excellent film properties. The film having less gels comprises visbroken LDPE-based recyclate, visbroken to a MFR (according to ISO 1133, 190°C, 2.16 kg) between 1 to 6 g/10 min, preferably between 1.8 and 3.5 g/10 min, preferably 2 and 3 g/10 min. Only if the MFR is kept at a lower level, the optical performance and quality of the obtained film is sufficiently high.

Furthermore, the visbroken polyolefin obtainable by the disclosed process and method, provides said recycled polyolefin, which has a second MFR2 from about 0.1 to 2.0 g/10 min, preferably the MFR2 is in the range of 0.5 to 1.5 g/10 min, preferably 0.9 to 1.2 g/10 min (according to ISO 1133, 190°C, 2.16 kg). By using the visbreaking process, the molecular weight distribution of the polymer chains is changed. Using the disclosed visbreaking process, the PE-polymer chains are broken or cleaved, resulting in a reduction of molecular size. This process helps to improve the optical performance of the recyclate to modify the properties of the recycled polymer to meet desired specifications for suitable film material and improve its sustainability for various applications. A slight increase in density results from the breaking of polymer chains through visbreaking in LDPE recyclates.

Using the visbroken material, a film with less defects can be prepared by the process comprising the steps of, visbreaking a polyolefin polymer, preferably a LDPE recyclate to a MFR2 (according to ISO 1133, 190°C, 2.16 kg) ranges from 0.11 to 2.0, and a melting point below about 150°C, casting the visbroken LDPE recyclate into a film with less gels.

Visbreaking conditions include thermal visbreaking. Thermal visbreaking involves temperature, pressure, and mechanical shear sufficient to cause polymer chain scission to predominate over polymer chain branching or cross-linking. In some embodiments, the visbreaking conditions consist of thermal visbreaking in the absence or substantial absence of oxygen at a temperature of at least 180°C above the melting point of LDPE. The casted film prepared from the visbroken LDPE recyclate shows superior optical performance having less gels, compared to the film prepared from the "base" recyclate LDPE.

Furthermore, films produced from the visbroken LDPE with less gels of about 95% and less defects are provided, having a haze in the range of less than 8 % and a gloss ranging from 40 to 80 (20°) at least greater than 50 (ASTM D2457), ranging from 80 to 150 at least greater than 100 (60°) (ASTM D2457).

In Table 1 the measured number of the defects are given, the decrease of about 95% preferably of about 97%. Comparison of the product / sample 1 (without vacuum) and product / sample 2 (with vacuum) shows, that both are handled under the extruder speed conditions, but resulting slightly different MFR and density. The energy intake is slightly lower under vacuum conditions. Also, in figure 1 is shown, that with vacuum conditions the MFR is slightly higher when vacuum conditions are applied during visbreaking, but nevertheless the amounts of defects remaining in the visbroken recyclate material are significantly lower than in the initial starting material. As outcome of this method is has been proved, that if necessary, due to high amount of gaseous and volatile odor, gases and residues, vacuum conditions can be easily applied, as the properties of the visbroken material under both conditions are comparable and show high performance and quality, still having a low MFR and low density in the same range as the starting material.

The film comprising the visbroken material, is processed to a film, having less gels, a haze less than 8 %, and a gloss ranging from 40 to 80 (20°), preferably greater than 50 (ASTM D2457), ranging from 80 to 150, preferably greater than 100 (60°) (ASTM D2457). With less gels and defects compared to the initial LDPE recyclate a reduction of about 95 %, preferably 97% either with vacuum conditions or without.

### Definitions

As used herein, "LDPE recyclate" means low density polyethylene (LDPE) containing also linear low density polyethylene (LLDPE) recyclate derived from Post Consumer Waste (PCR) mainly consisting of film waste, mainly comprising Low Density Polyethylene from Retail, Distribution & Manufacturing, but also comprising Linear Low Density Polyethylene in various amount derived LLDPE from included stretch wrap. Having a distribution of 98% natural & 2% colored film waste, which has already been processed, at least once by an extrusion process, after end of first life cycle, being processed via collection and sorting, but before being subjected to any visbreaking as disclosed processes herein.

In the sense of the invention, "LDPE" recyclate means an ethylene homopolymer and/or ethylene copolymer having a density in the range of 0.910 g/cm3 to 0.940 g/cm3.

As used herein, "LDPE recyclate" means post-consumer recycled ("PCR") LDPE / rLDPE and/or post-industrial recycled ("PIR") LDPE, an LDPE recyclate, comprising also LLDPE / rLLDPE. Polyolefin recyclate is derived from end products that have completed their life cycle as consumer goods and would otherwise be disposed of as waste (e.g., polyethylene water bottles), or from plastic waste generated as waste from industrial processes. Post-consumer polyolefins include polyolefins already collected in commercial and residential recycling programs, including flexible packaging (cast film, blown film and BOPP film), rigid packaging, blow molded bottles and injection molded containers. Typically, two main polyolefin fractions are obtained through separation steps from other polymers such as PVC, PET, or PS, namely polyethylene recyclate (LDPE and LLDPE) and contaminants containing polypropylene recyclate (including homopolymers, random copolymers and heterophasic copolymers). The polyethylene recyclate can be further separated to recover the fraction having LDPE as the main component. In addition to contamination from different polymers, LDPE recyclate often contains other impurities such as PMMA, PC, wood, paper, textiles, cellulose, food, and other organic wastes, many of which cause LDPE recyclate before typical processing and it has an unpleasant odor afterwards.

"Visbreaking conditions" as used herein means thermal visbreaking and/or peroxidative visbreaking. Thermal visbreaking involves temperature, and/or mechanical shear sufficient to cause polymer chain scission instead of polymer chain branching or cross-linking. As used herein, a visbroken polyethylene will have a lower number average and weight average molecular weight, a narrower molecular weight distribution, a slightly higher melt index, and a slightly higher density. The visbreaking conditions consist of thermal visbreaking at different temperatures, a temperature greater than or qual to 220°C, a temperature lower than or equal to 340°C, or in the range of 220°C to 340°C.

As used herein, "visbreaking" means according to the present invention subjecting a low density polyethylene to thermal treatment such that the Mn, Mw and MWD (ratio Mw / Mn) of the so-treated LDPE are reduced, while the MFR (ISO 1133, at 190°C, 2.16 kg) stays in the same range (0.5 to 2.0 g/10 min) and is not increased beyond.

As used herein, "visbroken LDPE" or "visbroken LDPE recyclate" means the product obtained by subjecting LDPE recyclate derived from film waste and recyclate feedstock to visbreaking conditions as described herein.

In the sense of the disclosure, "visbroken LDPE recyclate melt" means a LDPE recyclate which has been thermally and/or mechanically processed in an extruder and has been molten.

In the sense of the present invention "LDPE-feedstock" means that at the feedstock applied in the process described herein is derived from LDPE post consumer waster, and/or post industrial waste, comprising LDPE film waste material, it can be either provided as flakes inn colorless/ uncolored appearance, as mixture derived from uncolored and colored flakes. Although a lot of efforts have been made to provide "pure" feedstock, comprising only LDPE, impurities such as PP, PET, PVC etc. from polymer side and also traces of TiO2, CaCO3, limonene, and other impurities are also provided.

As used herein, the term "melt blending" and "mechanical treatment" involves the use of shear force, extensional force, compressive force, ultrasonic energy, electromagnetic energy, thermal energy or combinations comprising at least one of the foregoing forces or forms of energy and is conducted in a processing equipment wherein the aforementioned forces are exerted by a single screw, multiple screws, intermeshing co-rotating or counter-rotating screws, non-intermeshing corotating or counter-rotating screws, reciprocating screws, screws with pins, barrels with pins, rolls, rams, helical rotors, or combinations comprising at least one of the foregoing. Melt blending may be conducted in machines such as, single or multiple screw extruders, Buss kneader, Eirich mixers, Farrel Continuous Mixer, Haake mixer, a Brabender internal mixer, helicones, Ross mixer, Banbury mixer, roll mills, molding machines such as injection molding machines, vacuum forming machines, blow molding machines, or the like, or combinations comprising at least one of the foregoing machines.

The term "energy intake" of polymers in general during visbreaking process in an extruder refers to the amount of energy absorbed or utilized by the polymer material as it undergoes visbreaking within an extrusion process. This includes thermal treatment steps, mechanical treatment applied by the extruder, e.g., extruder speed. Visbreaking involves subjecting the polymer to heat and pressure, causing the polymer chains to break down and undergo molecular rearrangements. The energy intake during this process is crucial for controlling the extend of polymer degradation, chain scissoring, and avoid new defects and gels by crosslinking, when it comes to LDPE, optimizing product properties, and ensuring efficient operation of the extrusion equipment.

"Extruder" as used herein in the context of "first extruder", "second extruder" and "third extruder" means a separate extrusion device in some embodiments, while in others in the examples, individual sections within a single extrusion device are meant. In the extruder a certain and specific "extruder-speed" is applied to the samples. In some embodiments, the first extruder and the second extruder are separate machines. In some embodiments, the first extruder and the second extruder are separate sections in a single machine. The method and process disclosed herein might apply only one extruder, but is not limited to, so using a second extruder and a third extruder as separate machines is also disclosed. In some embodiments, the second and third extruders are separate sections in a single machine. In some embodiments, the first, second and third extruders are separate machines. In some embodiments, the first, second and third extruders are separate sections in a single machine. As used herein, "extruder" includes any device or combination of devices capable of continuously processing one or more polyolefins under visbreaking conditions, compounding conditions, melting conditions.

In the sense of the present invention "under vacuum conditions" during visbreaking is to be understood, applying vacuum in an extruder refers to creating a low-pressure environment within the extruder chamber. This involves removing air and/or other gases from decomposition of consumer residues, contaminants etc. especially odor from the PCR. This reduction in pressure is used to facilitate the removal of volatile components and odor and by-products, improve the quality and processability of the final products, and enhance the efficiency of the thermal cracking process.

The term "odor" means, that during visbreaking processes, especially under vacuum conditions, a range of gases and degradation products can be released from LDPE recyclate. These include hydrocarbons, aromatic compounds, oxygenated compounds, inert gases, and low molecular weight degradation products such as oligomers, waxes, volatile organic compounds (VOC) and alcohols.

The term "less gels" means that by applying the visbreaking process under controlled thermal and mechanical conditions an using vacuum, the number of gels and defects in LDPE recyclate can be significantly reduced. This results in higher quality films with fewer defects imperfections and less impurities and less gels.

**Table 1: Providing properties of the Reference and the Samples 1 and 2 obtained under different visbreaking conditions, with or without vacuum.**

| | **Reference** | **Sample 1** | **Sample 2** |
|---|---|---|---|
| | | Without vacuum | With vacuum |
| Energy intake [kWh/kg] | | 0.293 | 0.281 |
| Density | 0.9291 | 0.929 | 0.9301 |
| MFR 2.16 kg [g/10 min] | 0.7 | 0.95 | 1.1 |
| MFR 5 kg [g/10 min] | 2.6 | 3.55 | 4.16 |
| GPC Mw [g/mol] | 148,224 | 108,377 | 107,618 |
| Extruder speed | | 500 | 500 |
| Number of defects > 300 µm [1/m2] | 76211.01 | 2431.36 | 2490.51 |
| Number of defects > 450 µm [1/m2] | 24765.34 | 351.83 | 373.34 |
| Total defects | 100 % | 2.69% | 2.77% |

## Claims

1. A visbreaking method for processing low density polyethylene (LDPE) recyclate comprising the steps of:
a) providing a LDPE recyclate, comprising LLDPE; having
i. a first density in the range of from 0.910 g/cm3 to 0.940 g/cm3 (according to ISO 1183),
ii. a first MFR in the range of 0.1 to 2.0 g/10 min (according to ISO 1133, 190°C, 2.16 kg),
iii. a first Mw of 110.000 to 120.000 g/mol measured via GPC (according to ISO 13885-1),
b) extruding the recyclate to obtain a visbroken LDPE recyclate melt,
c) optionally subjecting to vacuum conditions,
d) subjecting the LDPE recyclate melt to visbreaking conditions performed at least at two different temperatures,
e) obtaining a visbroken LDPE recyclate; having
i. a second density in the range of from 0.910 g/cm3 to 0.940 g/cm3 (according to ISO 1183),
ii. a second MFR in the range of 0.1 to 2.0 g/10 min (according to ISO 1133, 190°C, 2.16 kg),
iii. a second Mw of 70.000 to 100.000 g/mol measured via GPC (according to ISO 13885-1).

2. The method according to claim 1, wherein
a) the ratio of the second density to the first density is in the range of 1.0 to 1.5,
b) the ratio of the second MFR to the first MFR is in the range of 1.0 to 1.5,
c) the ratio of second molecular weight distribution to the first molecular weight distribution is in the range of from 0.60 to 0.85.

3. The method according to one of the preceding claims, wherein the low density polyethylene is 100 % recyclate, derived from a post consumer and/or post industrial waste or a blend thereof, comprising low density polyethylene (LDPE) and linear low density polyethylene (LLDPE).

4. The method according to any of the preceding claims, wherein the LDPE recyclate feedstock comprises post-consumer recyclate waste, post-industrial recyclate waste, or a combination thereof, preferably from recyclate film material.

5. The method according to any of the preceding claims, wherein the method comprising the steps of
a) subjecting the LDPE recyclate to at least one thermal and mechanical treatment step at a temperature higher than 220°C in an extruder, and
b) at least one thermal and mechanical treatment step at a temperature lower than 340°C in an extruder,
c) optionally applying vacuum during the thermal and mechanical treatment in the extruder, either in step a) and/or b),
wherein the order of the steps a) and b) are arbitrary and can be renumbered, rearranged, repeated in every feasible way.

6. The method according to any of the preceding claims, wherein during the thermal and mechanical treatment of the LDPE recyclate the method imparts a specific energy of about 0.01 to about 5 kWh/kg to said LDPE recyclate, to obtain visbroken LDPE recyclate.

7. The method according to any of the preceding claims, wherein the visbroken LDPE recyclate is further processed to a film with less defects, comprising the visbroken LDPE recyclate having a MFR of 0.1 to 2.0 g/10 min (ISO 1133, 190°C, 2.16 kg), preferably between 0.8 and 1.5 g/10 min, preferably 0.9 and 1.2 g/10 min.

8. The method according to any of the preceding claims, wherein the visbroken LDPE is subjected to vacuum conditions during visbreaking, for odor reduction and degassing.

9. A visbroken LDPE recyclate obtainable by a method according to any of the preceding claims, wherein said visbroken LDPE recyclate has a MFR of 0.1 to 2.0 g/10 min (ISO 1133, 190°C, 2.16 kg), preferably between 0.8 and 1.5 g/10 min, preferably 0.9 and 1.2 g/10 min.

10. A film comprising the visbroken LDPE recyclate, having less gels, with a reduction of defects of at least about 95%, preferably 97%.

11. The Film, according to claim 9, comprising the visbroken LDPE recyclate obtainable by a method comprising the steps of:
a) visbreaking a LDPE recyclate to a visbroken LDPE recyclate having
i. a second density of from 0.920 g/cm3 to 0.930 g/cm3 (according to ISO 1183),
ii. a second MFR (according to ISO 1133, 190°C, 2.16 kg) in the range of 0.1 to 2.0, and
iii. a second Mw of 70.000 to 100.000 g/mol measured via GPC (according to ISO 13885-1),
iv. a melting point of about 150°C, and
b) casting the visbroken LDPE recyclate into a film.

12. Film, according to any of the preceding claims, comprising the visbroken LDPE recyclate, obtainable by a process according to any of the previous claims.

13. Film, according to any of the preceding claims, having,
a) less gels, of at least 95 %,
b) a haze less than 8 %, and
c) a gloss ranging from 40 to 80 (20°), preferably greater than 50 (ASTM D2457), ranging from 80 to 150, preferably greater than 100 (60°) (ASTM D2457).

14. Film, according to any of the preceding claims, wherein the at least one temperature applied to the LDPE recyclate in the extruder is between 220°C and 340°C.
